Europäisches Patentamt

European Patent Office

Office européen des brevets

(11) Veröffentlichungsnummer: **0 374 713**
**A2**

## (12) EUROPÄISCHE PATENTANMELDUNG

(21) Anmeldenummer: **89123014.6**

(22) Anmeldetag: **13.12.89**

(51) Int. Cl.5: **F04D 29/10**

(30) Priorität: **23.12.88 DE 3843429**

(43) Veröffentlichungstag der Anmeldung:
**27.06.90 Patentblatt 90/26**

(84) Benannte Vertragsstaaten:
**DE FR GB IT NL**

(71) Anmelder: **KSB Aktiengesellschaft**
**Johann-Klein-Strasse 9**
**D-6710 Frankenthal(DE)**

(72) Erfinder: **Schäfer, Horst**
**Kurze Strasse 3**
**D-2730 Rhade(DE)**
Erfinder: **Beiss, Günter**
**Eppenheiner Strasse 7**
**D-2800 Bremen 44(DE)**

(54) **Wellenabdichtung an Strömungsmaschinen.**

(57) Die Erfindung betrifft eine Wellenabdichtung, die einen Wellendichtring (5) aufweist, wobei das freie Ende von dessen Dichtlippe (6) dem Gehäuseinnern der Strömungsmaschine (1) zugekehrt ist. Einem Bereich höheren Druckes der Strömungsmaschine (1) entnommenes Fördermedium gelangt in die Wellenabdichtung und durchströmt den Wellendichtring (5).

Fig. 3

EP 0 374 713 A2

## Wellenabdichtung an Strömungsmaschinen

Die Erfindung betrifft eine Wellenabdichtung gemäß dem Oberbegriff des Hauptanspruches.

Die DE-A 2 021 775 zeigt eine Stopfbuchse mit darin angeordneten Wellendichtringen. Um das bei einem Nachziehen der Stopfbuchspackung zwangsläufige Setzen von Packungsringen und damit ein eventuelles Verschieben eines Sperringes zu verhindern, sind die sogenannten inneren Packungsringe ersetzt worden durch ein oder mehrere Wellendichtringe. Da diese in axialer Richtung nicht zusammendrückbar sind, bleibt der eine Zufuhr von Spülflüssigkeit sicherstellende Sperring in seiner Position.

Die Druckbeaufschlagung des Sperringes sowie der Packungsringe mit Spülflüssigkeit kann hierbei vom Druckraum der Kreiselpumpe aus erfolgen. Das dann zugeführte Fördermedium verhindert ein Verbrennen der gegen die Welle gepreßten Packungsringe. Da die Stopfbuchse gegenüber dem gesamten Pumpendruck abdichten muß, ist mit einem hohen Verschleiß und demzufolge einem häufigen Wechseln der Packungsringe zu rechnen.

Der durch die verwendeten Wellendichtringe bedingte Nachteil einer eventuell gegebenen größeren Leckage wird als praktisch ohne Bedeutung angesehen, da die Leckage mit der Spülflüssigkeit abgeführt wird. Dieses Verfahren mag zwar bei der Förderung von Wasser praktikabel sein, jedoch bei der Förderung von aggressiven Medien sind besondere Vorkehrungen zu treffen, um eine Schädigung der Umwelt zu verhindern.

Die DE-A 2 930 514 zeigt einen Dichtring, dessen Dichtlippe unter Druckbelastung an einer entsprechend gewölbten Oberfläche der Welle bzw. einer darauf befestigten Wellenschutzhülse anliegt. Der auf die Dichtungslippe einwirkende Druck preßt diese gegen die Kontur der Pumpenwelle, um somit eine größere Anlagefläche zu erlangen. Die größere Anlagefläche vermindert die Flächenpressung an dieser Stelle und vermeidet ein Einlaufen der Dichtungslippe in die Pumpenwelle. Desweiteren wird damit ein Umklappen der flexiblen Dichtungslippen verhindert. Eine eventuell zwischen den Dichtungslippen angeordnete Flüssigkeitskammer soll in bekannter Weise eine Isolierung zwischen dem zu pumpenden Medium und dem Wellengehäuse herstellen.

Der Erfindung liegt die Aufgabe zugrunde, für mit Sperrflüssigkeit beaufschlagte Wellenabdichtungen eine Gestaltung zu entwickeln, welche den Druckunterschied innerhalb der Wellenabdichtung sehr klein hält. Die Lösung dieser Aufgabe erfolgt gemäß dem kennzeichnenden Teil des Hauptanspruches.

Aufgrund der erfindungsgemäßen Gestaltung wird die Funktion der Wellendichtringe ins Gegenteil verkehrt, indem nämlich der dem Innern des Strömungsgehäuses zugekehrte Wellendichtring keine Dichtwirkung ausübt, sondern als ein Drosselring Verwendung findet. Da der Dichtring entgegen seiner eigentlichen Bestimmung Anwendung findet und der auf die Dichtring-Vorderseite einwirkende Spülflüssigkeitsdruck ein Abheben der Dichtlippe von der eigentlich abzudichtenden Welle bewirkt, entsteht zwischen Welle und freiem Dichtlippenende ein Ringspalt, durch den Spülflüssigkeit vom Stopfbuchsraum in das Innere der Strömungsmaschine gelangt. Als Folge hiervon und Versuche haben dies bestätigt, muß von der Dichtung nicht mehr der gesamte Druck der Strömungsmaschine aufgenommen werden, sondern es ist nur noch ein Druck abzudichten, welcher ungefähr 0,5 bar über dem jeweiligen Zulaufdruck oder Saugdruck der Strömungsmaschine liegt. Dies bedeutet eine erheblich geringere Druckbelastung der Wellenabdichtung und ist selbstverständlich nur bei den Strömungsmaschinen zulässig, bei denen gefahrlos Sperrflüssigkeit in das innerhalb der Strömungsmaschine befindliche Medium gelangen kann. Besonders vorteilhaft ist dies bei Lösungen, bei denen die Sperrflüssigkeit dem Medium der Strömungsmaschine entspricht.

Eine Ausgestaltung der Erfindung sieht vor, daß in einer flüssigkeitsführenden Leitung zwischen einer Stelle höheren Druckes und dem Stopfbuchsraum eine Drossel angeordnet ist. Diese Maßnahme findet in denjenigen Fällen Verwendung, bei denen die Drosselwirkung der Zuführleitung nicht ausreichend groß genug ist. In diesen Fällen wird mit Hilfe der Drossel im Bereich des Eintritts in die Stopfbuchse ein Druck sichergestellt, der ungefähr 0,5 bar über dem abzudichtenden Druck liegt. Dieses niedrige Druckniveau ermöglicht geringe Anpreßkräfte im Bereich der Dichtelemente. In entsprechender Weise wirkt die in Anspruch 3 beschriebene Ausgestaltung. Mittels entsprechender Rohrleitungsdimensionierung ist somit eine Drosselfunktion einstellbar.

Gemäß der in Anspruch 4 beschriebenen Ausgestaltung ist auch eine Druckbeaufschlagung des Stopfbuchsraumes durch eine sogenannte Fremdquelle möglich. Hierbei kann die Flüssigkeit aus einem externen System zugeführt werden. Und gemäß der in Anspruch 5 beschriebenen anderen Ausgestaltung können für die Abdichtung zur Atmosphärenseite hin anstelle von Stopfbuchsringen ebenfalls Wellendichtringe und/oder Gleitringdichtungen Anwendung finden.

Ausführungsbeispiele der Erfindung sind in den Zeichnungen gezeigt und werden an einer die Strömungsmaschine darstellenden Kreiselpumpe im folgenden näher beschrieben. Es zeigen die

Fig. 1 einen Querschnitt durch eine Kreiselpumpe doppelflutiger Bauart, die

Fig. 2 und 3 vergrößerte Darstellungen der Wellendichtung, die

Fig. 4 eine Wellendichtung mit Wellendichtring, die

Fig. 5 eine einen Einlaufbereich abdichtende konventionelle Stopfbuchse als Ausschnitt, die

Fig. 6 und 7 Diagramme mit den Druckverläufen im Bereich einer konventionellen Stopfbuchse, die

Fig. 8 eine Stopfbuchse mit erfindungsgemäß angeordnetem Wellendichtring und die

Fig.9 und 10 Diagramme mit den Druckverläufen im Bereich der Stopfbuchse gemäß Fig. 8.

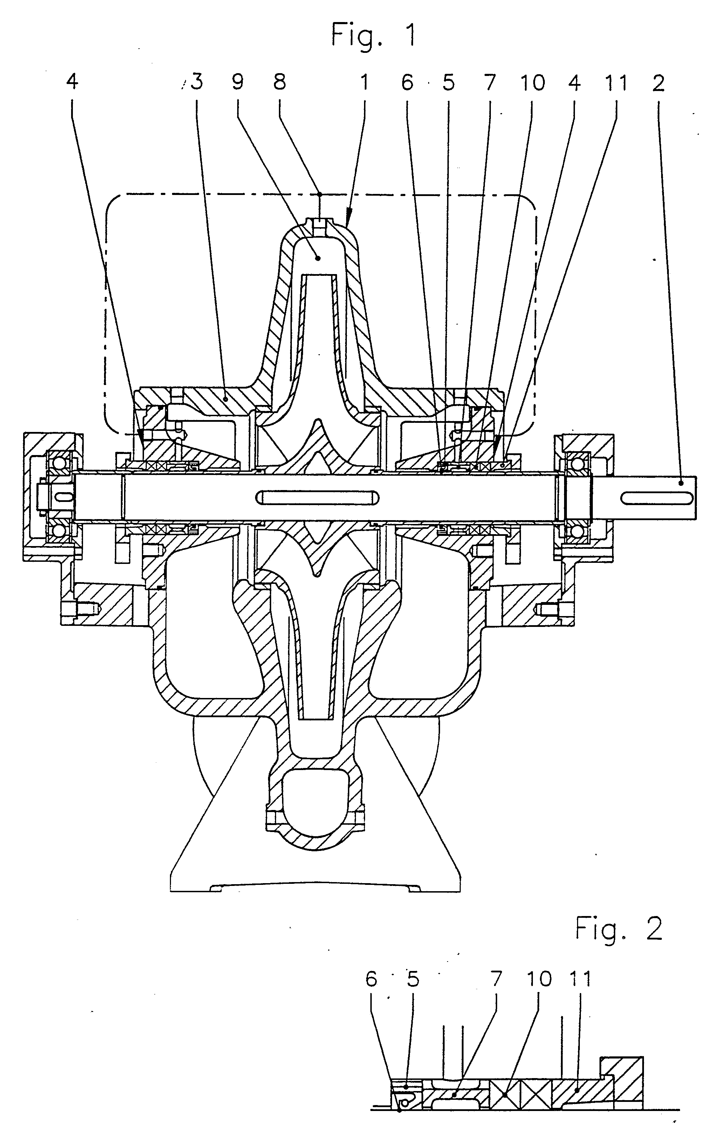

Die Fig. 1 zeigt im Schnitt eine als doppelflutige Kreiselpumpe ausgebildete Strömungsmaschine (1), deren Welle (2) das Gehäuse (3) beidseitig durchdringt. Die Abdichtung der Welle (2) erfolgt in dem hier gezeigten Beispiel mittels Stopfbuchsen (4) - andere gebräuchliche Dichtelemente sind ebenfalls verwendbar - bei denen anstelle eines dem Gehäuseinnern nächstgelegenen Packungsringes bzw. Absperrelementes ein Wellendichtring (5) Verwendung findet. Das freie Ende von dessen Dichtlippe (6) ist dem Gehäuseinnern zugekehrt. Dem Wellendichtring (5) ist desweiteren ein Sperring (7) nachgeordnet, der durch eine Leitung (8) von dem Druckraum (9) der Strömungsmaschine mit Sperrflüssigkeit beaufschlagt wird. Nach außen hin schließen sich an den Sperring Packungsringe (10) an, welche durch eine Stopfbuchsbrille (11) dichtend an die Welle bzw. die darauf angebrachte Wellenschutzhülse gepreßt werden.

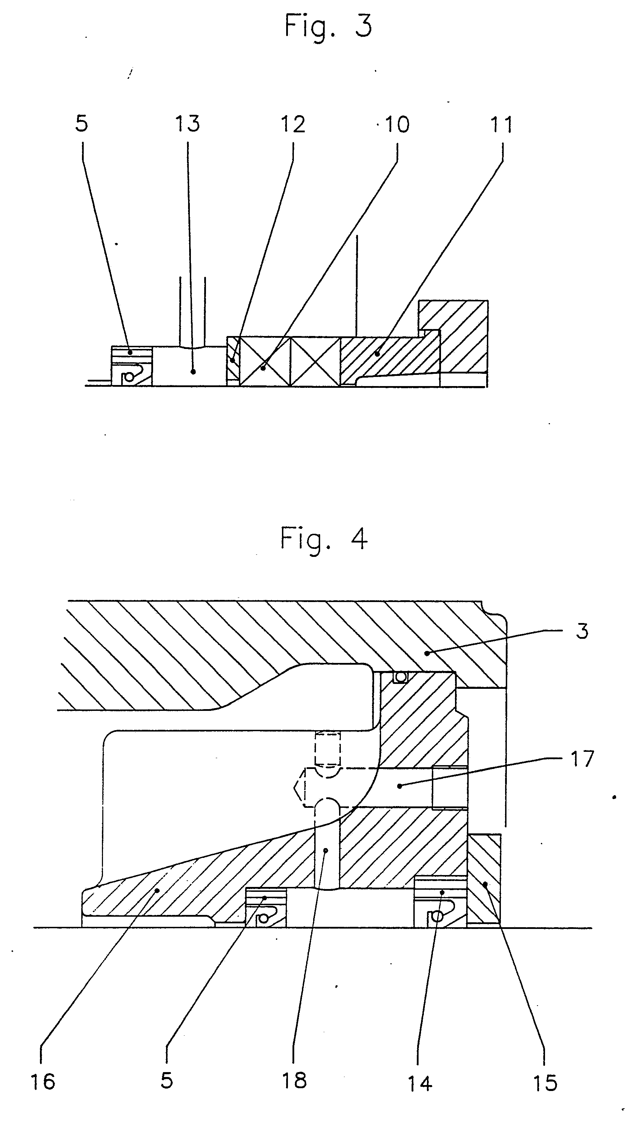

In der Fig. 2 ist eine vergrößerte Darstellung der Wellenabdichtung gezeigt. Der Wellendichtring (5) ist so eingebaut, daß das freie Ende seiner Dichtlippe (6) dem Innern der Strömungsmaschine zugekehrt ist. Unter Zwischenschaltung eines Sperringes (7) sind mehrere, hier zwei Packungsringe (10) nachgeordnet und werden von einer Stopfbuchsbrille (11) dichtend angepreßt.

Bei der in Fig. 3 gezeigten Lösung findet anstelle eines Sperringes ein Ring (12) Anwendung, welcher verhindert, daß durch die Stopfbuchsbrille (11) die Packungsringe (10) zu weit in den Stopfbuchsraum (13) gedrückt werden und somit die Zufuhr für die Sperrflüssigkeit versperrt werden kann.

Die in der Fig. 4 gezeigte Ausführungsform einer Wellendichtung verwendet zur Abdichtung nach außen statt Stopfbuchsringen nur einen einzigen Wellendichtring (14). Ein außen angebrachter Stützring (15) dient hier der Lagesicherung des Wellendichtringes (14). Die Wellendichtringe (5, 14) sind innerhalb eines Dichtungsgehäuses (16) angeordnet, welches wiederum innerhalb des Strömungsmaschinengehäuses (3) als eigenständiges Bauteil positioniert ist. Die Sperrflüssigkeitszufuhr stellen die Kanäle (17, 18) sicher.

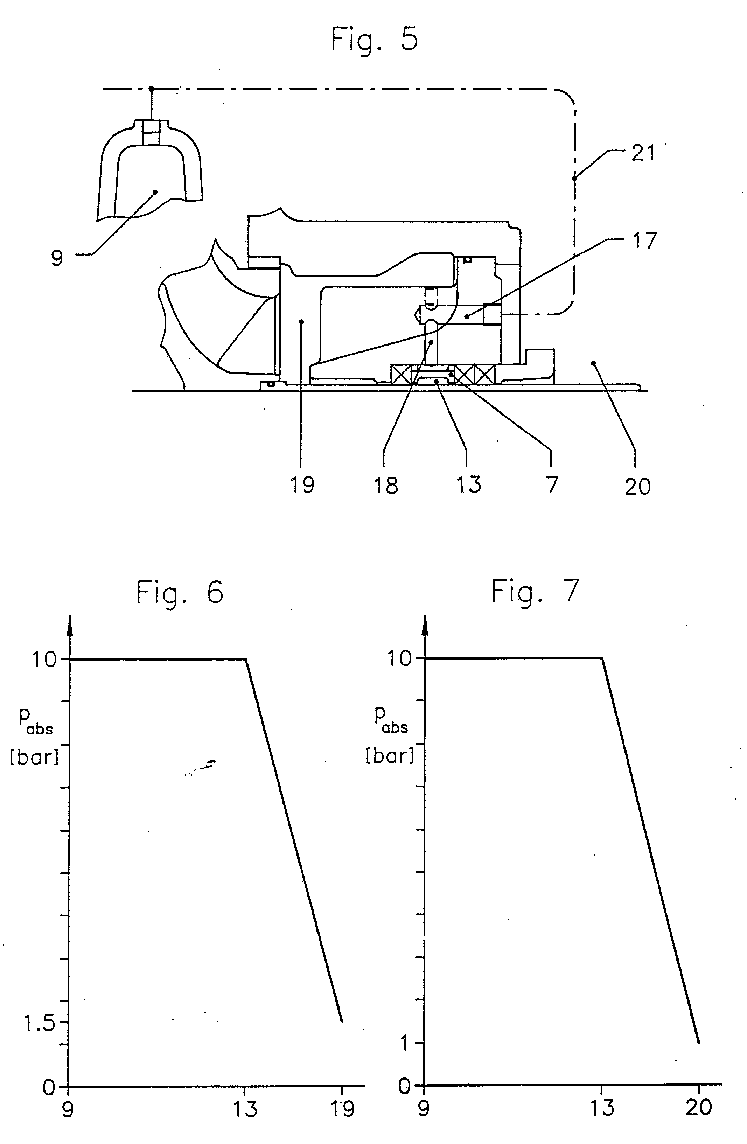

Die Fig. 5 zeigt schematisch einen Ausschnitt der Strömungsmaschine, insbesondere die Wirkverbindung zwischen dem Druckraum (9) und einer konventionellen Stopfbuchse. Hierbei sind beiderseits des Sperringes (7) zur Wellenabdichtung ausschließlich Packungsringe angeordnet. Der vor dem Laufrad befindliche Saugraum, welcher dem Innern der Strömungsmaschine entspricht, wurde mit der Ziffer (19) gekennzeichnet und die äußere Atmosphärenseite mit der Ziffer (20).

In den Fig. 6 und 7 sind die Druckverhältnisse innerhalb einer Stopfbuchse gemäß Fig. 5 darstellende Diagramme gezeigt. Hierbei sind die Druckverläufe über den einzelnen Räumen der Wellenabdichtung aufgetragen, und zwar in Fig. 6 der Druckverlauf vom Druckraum (9) zum Stopfbuchsraum (13) innerhalb der Stopfbuchse mit dem darin angeordneten Sperring (7) und weiter zum Saugraum (19). Ausgehend von dem in dem Druckraum (9) herrschenden absoluten Druck sowie der geringen Verluste innerhalb einer Verbindungsleitung (21) und der Kanäle (17, 18) besteht innerhalb des Raumes (13) ein annähernd gleicher Druck wie im Raum (9). Dieser kommt dadurch zustande, daß zur Verminderung von Flüssigkeitsverlusten die Stopfbuchse so stark angezogen ist, daß sowohl der dem Gehäuseinnern zugekehrte Packungsring als auch die zur Atmosphärenseite hin abdichtenden Packungsringe nur einen minimalen Flüssigkeitsdurchfluß und damit einen großen Druckverlust zulassen. Infolgedessen ist das Druckniveau im Stopfbuchsraum (13) der Wellendichtung nicht durch den angenommenen niedrigen Druck von ca. 1,5 bar im Saugraum bestimmt, sondern im wesentlichen durch den Druck im Druckraum (9).

Die Fig. 7 entspricht in ihrem Aufbau weitgehend der Fig. 6, jedoch mit dem Unterschied, daß hier ausgehend vom Stopfbuchsraum (13) das Druckgefälle zur Atmosphärenseite (20) hin aufgezeigt ist.

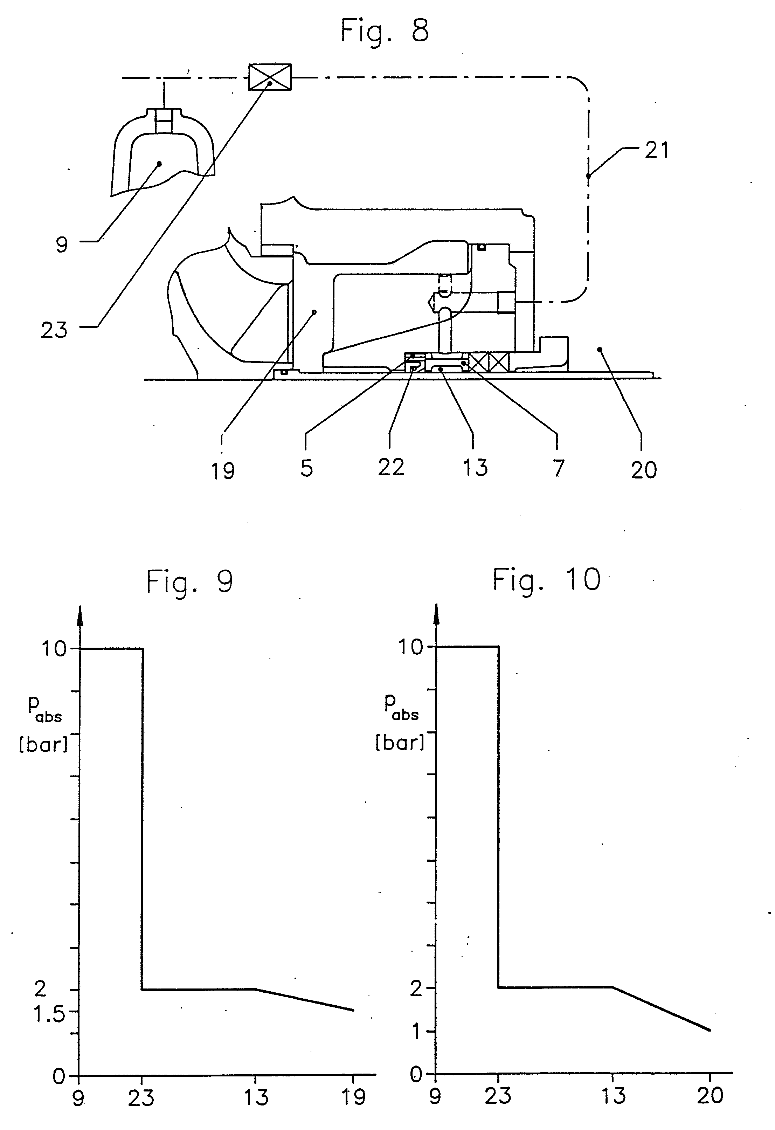

Die Fig. 8 zeigt demgegenüber eine erfindungsgemäße Darstellung der Wellendichtung. Ein üblicherweise dem Pumpeninnern zugekehrter Dichtungs- oder Packungsring ist hier durch einen gewissermaßen verkehrt herum eingebauten Wellendichtring (5) ersetzt worden. Der im Stopfbuchsraum (13) vorherrschende Druck kann sich über die von der Welle abhebenden Dichtlippe des Wellendichtringes (5) zum Saugraum (19) hin abbauen. Dabei weicht das freie Ende (6) des Wellendichtringes (5) nach außen hin aus, wobei jedoch der darauf einwirkende Zugfederring (22) nur eine begrenzte Öffnung zuläßt und somit ein definierter Drosselspalt gebildet wird. Dies ist durch entsprechende Gestaltung der Dichtlippen bzw. des verwendeten Lippenmaterials sowie der Anwendung findenden Zugfeder ohne weiteres möglich. Der Wellendichtring (5) wird somit entgegen seiner eigentlichen Bestimmung benutzt. Eine in die Verbindungsleitung (21) eingesetzte Drossel (23) stellt sicher, daß die Wellenabdichtung nur mit einem sehr geringen Druck belastet wird. Damit halten sich auch eventuelle Flüssigkeitsverluste, die Reibung der äußeren Dichtelemente und der Verschleiß in Grenzen.

In den Fig. 9 und 10 sind die sich innerhalb der Wellenabdichtung einstellenden Druckverhältnisse in einer den Fig. 6 und 7 entsprechenden Art dargestellt. Bei der Fig. 9 ist erkennbar, daß infolge einer in die Verbindungsleitung (21) eingebauten Drossel (23) innerhalb des Stopfbuchsraumes (13) der Wellenabdichtung nur noch ein Druck von ca. 2 bar ansteht. Mit Hilfe des als zweite Drossel wirkenden Wellendichtringes (5), welcher eine degressive Verlustkennlinie aufweist, muß nun gegenüber dem Saugraum nur ein Druckunterschied von ca. 0,5 bar abgebaut werden. Hierbei wird von einem Druck von 1,5 bar innerhalb des Saugraumes ausgegangen. In analoger Weise ist gemäß Fig. 10 gegenüber der Atmosphärenseite (20) nur noch ein Druck von 1 bar abzudichten. Dies hat nun den gravierenden Vorteil, daß die zur Atmosphärenseite hin Anwendung findenden Packungsdichtringe nur noch sehr gering angezogen werden müssen. Die direkte Folge davon ist eine starke Reibungsverminderung zwischen der Wellendichtung und der Welle und eine wesentlich einfachere Abdichtung bei erheblich geringem Verschleiß. Desweiteren eröffnet sich damit die Möglichkeit zur Verwendung von einfachen handelsüblichen und gering belastbaren Dichtelementen anstelle der nicht immer ganz unproblematischen Stopfbuchsen.

## Ansprüche

1. Wellenabdichtung für Strömungsmaschinen, deren Antriebswelle mit Sperrflüssigkeit beaufschlagte Stopfbuchsen abdichten, wobei innerhalb des Stopfbuchsraumes ein oder mehrere Wellendichtringe angeordnet sind, **dadurch gekennzeichnet,** daß das freie Dichtlippenende (6) der Wellendichtringe (5) dem Innenraum der Strömungsmaschine (1) zugekehrt ist, und daß ein von mindestens einem Wellendichtring (5) gedrosselter Sperrflüssigkeitsstrom vom Stopfbuchsraum (13) zum Innenraum der Strömungsmaschine (1) fließt.

2. Wellenabdichtung nach Anspruch 1, dadurch gekennzeichnet, daß in einer flüssigkeitsführenden Leitung (8) zwischen einer Stelle höheren Druckes (9) und dem Stopfbuchsraum (13) eine Drossel (23) angeordnet ist.

3. Wellenabdichtung nach Anspruch 1, dadurch gekennzeichnet, daß die zwischen einer Stelle höheren Druckes (9) und dem Stopfbuchsraum (13) angeordnete flüssigkeitsführende Leitung (8) einen drosselnden Querschnitt aufweist.

4. Wellenabdichtung nach den Ansprüchen 1 bis 3, dadurch gekennzeichnet, daß die strömungsführende Leitung (8) mit einem Fremdmedium beaufschlagt ist.

5. Wellenabdichtung nach den Ansprüchen 1 bis 4, dadurch gekennzeichnet, daß innerhalb des Stopfbuchsraumes (13) angeordnete Wellendichtringe (14) und/oder Gleitringdichtungen zur Atmosphärenseite hin abdichten.

## Fig. 1

## Fig. 2

## Fig. 3

## Fig. 4

# Fig. 5

9

21

17

19  18  13  7  20

# Fig. 6

$p_{abs}$
[bar]

10

1.5

0

9          13    19

# Fig. 7

$p_{abs}$
[bar]

10

1

0

9          13    20

# Fig. 8

# Fig. 9

# Fig. 10